# EUROPÄISCHE PATENTSCHRIFT

(11) **EP 1 883 078 B1**
(45) Veröffentlichungstag und Bekanntmachung des Hinweises auf die Patenterteilung: **14.10.2015**
(21) Anmeldenummer: 07014142.9
(22) Anmeldetag: 19.07.2007
(51) Int. Cl.: G21C 19/20, F16B 21/04, F16B 7/20

(54) **Vorrichtung zur Handhabung von Kleinbauteilen**
Device for handling small components
Dispositif destiné à la manipulation de petits composants

(30) Priorität: 27.07.2006 DE 102006034737
(43) Veröffentlichungstag der Anmeldung: 30.01.2008
(73) Patentinhaber: Westinghouse Electric Germany GmbH, 68167 Mannheim (DE)
(72) Erfinder: Ziegelmeyer, Fritz, 76669 Bad Schönborn (DE)
(74) Vertreter: Miller, Toivo

(56) Entgegenhaltungen:
- EP-A1- 0 769 786
- WO-A-03/006119
- GB-A- 1 080 061
- GB-A- 2 231 363
- US-A- 4 154 545
- US-A- 5 602 887
- US-A1- 2005 271 463

## Beschreibung

Die Erfindung betrifft eine Vorrichtung zur Handhabung von Kleinbauteilen und/oder von Werkzeugen in kerntechnischen Anlagen, insbesondere in Reaktorbehältern und in Brennelementlagerbecken mit einem ersten Stab, der an seinem ersten Ende Greif- oder Haltemittel für die Handhabung der Kleinbauteile und/oder Werkzeuge aufweist und an seinem entgegengesetzten zweiten Ende mit Kupplungsmitteln versehen ist, die mit einem weiteren Stab zusammenarbeiten, der zur Verlängerung des ersten Stabes dient.

Es ist an sich bekannt, für die Handhabung von Kleinbauteilen und/oder von Werkzeugen in kerntechnischen Anlagen, insbesondere in Reaktorbehältern und in Brennelementlagerbecken Stäbe vorzusehen, die quasi als Verlängerung der menschlichen Hand dienen und an einem Ende mit Manipulationshilfen, wie zum Beispiel Haken, Ösen oder ähnlichem versehen sind. Hierbei ist jedoch häufig die Länge dieser Vorrichtungen begrenzt.

Um den Einsatz auch auf größeren Abstand, das heißt zum Beispiel in größerer Tiefe der jeweiligen Becken, zu ermöglichen, wurden Verlängerungen für derartige Stäbe vorgesehen, deren Handhabung jedoch umständlich war und zusätzliche Hilfspersonen erfordert, die beim Verlängern eines derartigen Stabes mitwirken. Insbesondere bedeutet das erhöhte Gewicht von derartigen mit Schnellkupplung versehenen Stäben eine zusätzliche Erschwernis, was dazu führt, dass deren Handhabung mehr als eine Person erfordert.

Aus der EP 0 769 786 A1 ist beispielsweise ist eine aus mehreren Stäben mittels Schraubverbindung gebildete und mit einem Kran handhabbare Fembedienungsstange für die Demontage und Montage einer Befestigungshülse eines Aufsatzes eines zerlegbaren Kernbrennstoffaufbaus bekannt geworden, wobei die Hülse im Inneren eines Führungsrohres des Brennstoffaufbaus verschraubt ist und die Stange einen röhrenförmigen Stangenkörper und eine erste röhrenförmige Betätigungsstange aufweist, die koaxial zum Stangenkörper moniert ist und in dessen Innerem in axialer Richtung verschiebbar ist.

Weiterhin aus der US 5 602 887 A eine Vorrichtung zur Durchführung von Reparaturarbeiten innerhalb eines Reaktorkessels entnehmbar, welche ein Werkzeug mit hydraulischem Spreizer oder einer Art Montiereisen umfasst, welches mit einem ersten Ende eines aus Vollmaterial gebildeten ersten Stabes über einen Bolzen oder Stift fest verbunden ist und welcher Stab an seinem zweiten Ende Kupplungsmittel zur Verbindung mit einem Service Stab aufweist.

Ausgehend von diesem Stand der Technik ist es Aufgabe der Erfindung eine Vorrichtung der eingangs genannten Art zu schaffen, deren Handhabung durch eine einzige Person möglich ist, das heißt ohne die Mitwirkung von weiteren Hilfspersonen. Insbesondere die Längenanpassung der Vorrichtung an die jeweiligen Erfordernisse nämlich durch Ansetzen von Verlängerungen soll ohne jegliche Einschränkung von der einzigen Person vorgenommen werden können.

Diese Aufgabe wird erfindungsgemäß gelöst durch die kennzeichnenden Merkmale des Patentanspruchs 1. Demgemäß sind Hohlstäbe vorgesehen, die als Kupplungsmittel eine in ein Ende eines ersten Stabes eingesetzte Hülse aufweisen, die fest mit dem ersten Stab verbunden ist, wobei die Hülse den ersten Stab überragt und den weiteren Stab zur Führung und Halterung aufnimmt, und die Hülse in ihrem den ersten Stab überragenden Bereich mit einer Verriegelungseinrichtung versehen ist, welche die Verbindung des weiteren Stabes mit dem ersten Stab sichert.

Weiterhin ist vorgesehen, dass die Verriegelungseinrichtung an ihrem zum Stabende weisenden Ende je eine Ausnehmung aufweist, welche diametral zueinander angeordnet sind und mit wenigstens einem am zugewandten Ende des zweiten Stabes angeordneten seitlich herausragenden Bolzen oder Stift zu dessen Aufnahme zusammenarbeitet.

Gemäß einer bevorzugten Weiterbildung der Erfindung ist die Verriegelungseinrichtung als Schiebemuffe ausgebildet, die auf der Außenfläche des Hohlstabes aufgeschoben ist und mittels des wenigstens einen Bolzens axial verschieblich gestaltet ist. Zunächst wird die formschlüssige Verbindung zwischen dem ersten und dem zweiten Stab hergestellt, indem ein im zweiten Stab endnah angeordneter Bolzen in eine Verriegelungskulisse eingreift.

Hierbei erfährt der zweite Stab eine Drehung um seine Längsachse, um so die Endposition in der Verriegelungskulisse zu erreichen. Danach wird die Verriegelungseinrichtung betätigt und die als Schiebemuffe Ausgebildete Verriegelungshülse zum Kupplungsende hin verschoben, wobei sie den Verriegelungsbolzen in der genannten Ausnehmung aufnimmt. Auf diese Weise ist eine Entriegelung der Stabverbindung verhindert, da die Schiebemuffe durch einen in ein an ihrem anderen Ende befindliches Langloch eingreifenden Sperrbolzen gegen Verdrehung blockiert ist.

Eine weitere zweckmäßige Ausführungsform ist dadurch gekennzeichnet, dass die Ausnehmung mit wenigstens einem am zugewandten Ende des zweiten Stabes angeordneten einseitig seitlich herausragenden Bolzen zusammenarbeitet.

Vorteilhafterweise ist gemäß einer Weiterbildung der Erfindung vorgesehen, dass die als Verriegelungskulisse dienende Ausnehmung in dem den ersten Stab überragenden Bereich, der in das Innere des ersten Stabes eingesetzten Kupplungshülse angeordnet ist, wobei die Hülse in dem die Verriegelungskulisse aufnehmenden Bereich verstärkt ist.

Eine alternativ bevorzugte Ausgestaltung der erfindungsgemäßen Vorrichtung kann sich dadurch auszeichnen, dass die Verriegelungskulisse von einer in die Hülsenwandung eingeformten kurvigen Innennut oder von einer in die Hülsenwandung entsprechend eingeformten Ausnehmung, zum Beispiel gekrümmtes Langloch, gebildet ist.

Eine weitere Verbesserung der erfindungsgemäßen Vorrichtung sieht vor, dass die Verriegelungshülse mit einer Feder versehen ist, welche bei der Verbindung mit dem zweiten Stab gegen die Federkraft aus der normalerweise erreichten Verriegelungsstellung durch Verschieben entfernt werden muß, um danach selbsttätig zurückzugleiten in die Verriegelungsstellung.

Gemäß einer bevorzugten Ausführungsform ist die Verriegelungskulisse als Winkel gestaltet mit einem ersten Schenkel, der achsparallel verläuft, sowie einem hierzu quer entlang dem Umfang laufenden zweiten Schenkel. Hierbei ist es vorgesehen, dass der achsparallel verlaufende erste Schenkel stirnseitig anfängt, das heißt an der Stirnseite des den ersten Stab überragenden Bereichs der Hülse beginnt, und als Innennut oder als Schlitz darin eingeformt ist und rechtwinklig hierzu in den zweiten Schenkel abknickt.

Die Länge des achsparallelen ersten Schenkels wie auch des am Umfang verlaufenden zweiten Schenkels hängt weitgehend von der Größe, dem Gewicht und dem Durchmesser des Stabes ab. Das Längenverhältnis der beiden Schenkel beträgt zweckmäßigerweise 1,5 bis 2 zu 1, das heißt der achsparallele erste Schenkel ist etwa doppelt so lang wie der am Umfang verlaufende zweite Schenkel. Aus Platzgründen kann es aber auch vorteilhaft sein, die Länge der beiden Schenkel etwa gleich zu gestalten.

Die Verriegelungskulisse kann in Weiterbildung der Erfindung - insbesondere zur Sicherung der Verriegelungsposition - auch als Doppelwinkel mit gleich oder unterschiedlich langen Schenkeln ausgeführt sein, indem die beiden ersten Schenkel wie zuvor beschrieben gestaltet sind, wobei sich jedoch am Ende des quer am Umfang verlaufenden zweiten Schenkels gemäß der zuvor beschriebenen Ausführungsvariante mit zwei Schenkeln ein weiterer Schenkel in achsparalleler Richtung hieran anschließt, der als formschlüssige Verriegelungsendstellung dient.

Diese Variante der Verriegelungskulisse ist dadurch gekennzeichnet, dass der erste Schenkel von der Stirnseite der Hülse axial verläuft bis zu einem ersten Winkel, von wo er sich quer hierzu über einen Teilumfang der Hülse erstreckt bis zu einem zweiten Winkel, und dass sein Verlauf ab dem zweiten Winkel wieder achsparallel ist.

Auch hier ist das Längenverhältnis vergleichbar dem der mit einem Winkel gestalteten Ausführungsform nämlich, dass der erste Schenkel der Kulissenführung etwa doppelt so lang ist wie der zweite Schenkel wobei der hieran wieder axial anschließende weitere Schenkel eine Länge von etwa dem 1- bis 2-fachen des Bolzendurchmessers, vorzugsweise von etwa dem 1,5-fachen des Bolzendurchmessers aufweist.

Zusätzlich zur erwähnten Hülse, die als Kupplungshülse mit schlitzartiger Kulissenführung fungiert, kann vorteilhafterweise noch eine weitere Hülse vorgesehen sein, welche die Kupplungshülse übergreift und zur Verriegelung dient. Diese weitere, auch als Verriegelungshülse bezeichnete Hülse hat einen enggepaßten Innendurchmesser, der auf den Außendurchmesser des Stabes abgestimmt ist und daran ausschließlich axial verschieblich angeordnet ist.

Zur Verriegelung dienen stirnseitige Einformungen, deren Anzahl und Anordnung mit der Anzahl der in den Kulissenführungen gleitenden Bolzenenden korreliert. Letztere stehen radial ein klein wenig über und werden von der Verriegelungshülse fixiert.

Hierbei ist von wesentlicher Bedeutung, dass die Verriegelungshülse nur längsverschieblich aber nicht drehbar ist. Hierfür sind Längsschlitze, in welche ein ortsfest mit dem jeweiligen Stab verbundener weiterer Bolzen eingreift, in dem Hülsenbereich eingeformt, welcher den stirnseitigen Einformungen entgegengesetzt ist. Gleichzeitig dient dieser weitere Bolzen dazu, die Axialbewegung der Kupplungshülse zu begrenzen.

Diese und weitere vorteilhafte Ausgestaltungen und Verbesserungen der Erfindung sind Gegenstand der Unteransprüche.

Anhand eines in der beigefügten Zeichnung dargestellten Ausführungsbeispieles der Erfindung sollen die Erfindung, vorteilhafte Ausgestaltungen und Verbesserungen der Erfindung sowie besondere Vorteile der Erfindung näher erläutert und beschrieben werden.

Es zeigen:
- Fig. 1: eine schematische Teilschnitt-Darstellung der gesamten erfindungsgemäßen Vorrichtung und
- Fig. 2: eine Seitenansicht der in Fig. 1 gezeigten Anordnung.

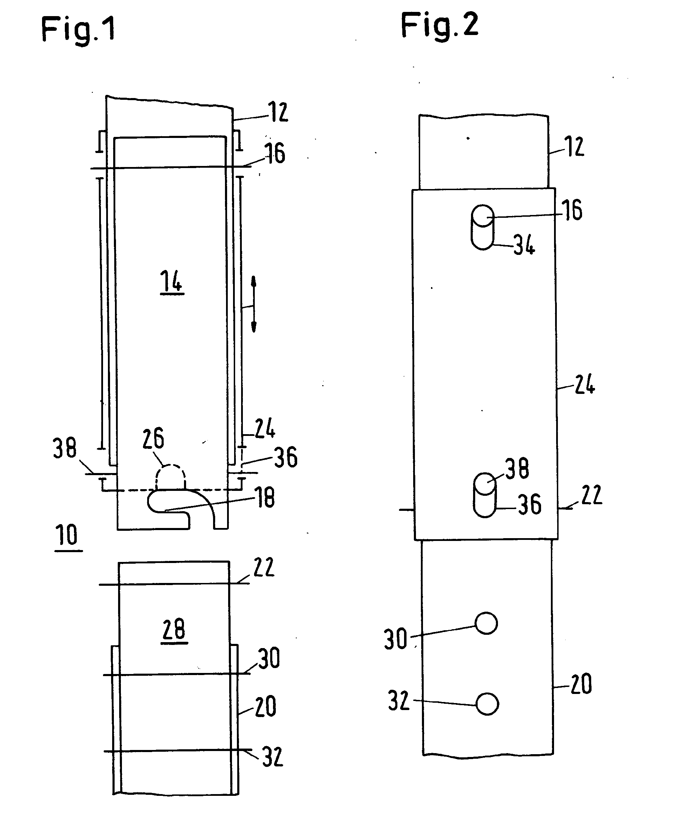

Fig. 1 zeigt schematisch eine erfindungsgemäße Vorrichtung 10, welche am Ende eines ersten Stabes 12 angeordnet ist und von einem als Kupplungshülse 14 bezeichneten Hohlteil gebildet ist, das mit enger Passung in das Ende des ersten Stabes 12 eingesetzt ist. Zur Lagesicherung arbeitet die Kupplungshülse 14 mit wenigstens einem radial angeordneten Sperrbolzen 16 zusammen, der die Kupplungshülse 14 und den Stab 12 in fluchtenden Bohrungen durchgreift.

Bei dieser Art der Darstellung wurde darauf verzichtet, bei Bolzen, Stäben und Hülsen die Form, Dicke beziehungsweise Wanddicke maßstäblich in der Figur zu zeigen, sondern es wurden lediglich in symbolischer Weise statt dessen Striche vorgesehen. Nur bei der Darstellung von Ausnehmungen wurde die ungefähre Kontur wiedergegeben.

Gemäß der Erfindung ist vorgesehen, daß die Kupplungshülse 14 das Stabende des Stabes 12 um etwa ein Drittel ihrer Länge überragt, wobei das den Stab überragende Ende radial verdickt ist und in diesem Bereich eine Wandstärke aufweist, die der Wanddicke der Kupplungshülse 14 im übrigen Bereich und der des Stabes 12 entspricht.

An ihrem freien Ende, das heißt in dem verdickten Bereich ist stirnseitig in die Kupplungshülse 14 eine zunächst achsparallel zur Längsachse danach hierzu quer am Umfang verlaufende winkelförmige Ausnehmung eingeformt, die als Verriegelungskulisse 18 dient. Vorzugsweise sind jedoch zwei diametral gegenüberliegend angeordnete Ausnehmungen als Verriegelungskulisse 18 vorgesehen, welche ähnlich wie ein Bajonettverschluß einen zum Eingriff hierin an einem mit der erfindungsgemäßen Vorrichtung zu kuppelnden zweiten Stab 20 vorgesehenen Kupplungsbolzen 22 aufnehmen.

Die Ankopplung des zweiten Stabes 20 in der Verriegelungskulisse 18 erfolgt durch eine Drehung des zweiten Stabes um dessen Längsachse. Dabei hängt die Drehung, das heißt der Verdrehweg, von der Länge der quer am Umfang der Kupplungshülse 14 laufenden Ausnehmung ab und beträgt zwischen 30° und 50°, vorzugsweise 35°.

Zusätzlich zu der in den Stab 12 endseitig eingepaßten Kupplungshülse 14, die mittels des bereits erwähnten Bolzens 16 ortsfest, das heißt auch drehfest, mit dem ersten Stab 12 verbunden ist, ist vorteilhafterweise eine Sicherung der Verriegelung vorgesehen, welche als Verriegelungshülse 24 ausgebildet ist und am Außenumfang des ersten Stabes 12 ebenfalls endseitig angeordnet ist.

Diese Verriegelungshülse 24 übergreift, wie gesagt, den Endbereich des ersten Stabes 12 soweit, daß, wenn sie zu dessen freiem Ende hin verschoben ist, wenigstens den von der Verriegelungskulisse 18 aufgenommenen Kupplungsbolzen 22 übergreift. Ein speziell hierfür in die Verriegelungshülse 24 an deren freiem Ende eingeformter Schlitz 26 nimmt dabei den Kupplungsbolzen 22 auf und verhindert so dessen seitliches Auswandern, das heißt der Kupplungsbolzen 22 wird praktisch von drei Seiten in seiner Endposition in der Verriegelungskulisse 18 fixiert.

Eine hier nicht näher dargestellte Federanordnung innerhalb der Verriegelungshülse 24, die sich zum Beispiel an dem Sperrbolzen 16 abstützt, beaufschlagt die Verriegelungshülse 24 zum freien Stabende hin, so daß zur Freigabe der Beweglichkeit des Kupplungsbolzens 22 zunächst die Verriegelungshülse 24 soweit vom Stabende weg bewegt werden muß, bis der Kupplungsbolzen 22 durch Drehung und axiale Verschiebung des zweiten Stabes 20 aus der Verriegelungskulisse 18 entfernt werden kann.

Eine weitere Besonderheit der erfindungsgemäßen Vorrichtung 10 ist, daß das der Kupplungshülse 14 zugewandte Ende des zweiten Stabes 20 einen in den zweiten Stab 20 eingesetzten Kupplungsdorn 28 aufweist, dessen Außendurchmesser auf den Innendurchmesser der Kupplungshülse 14 angepaßt ist, so daß der Kupplungsdorn 28 mit geringem radialen Spiel in die Kupplungshülse 14 hineingleiten kann und man hierbei den Kupplungsbolzen 22 in die für ihn bestimmte Aufnahme der Verriegelungskulisse 18 einbringen kann.

Der Kupplungsdorn 28 ist mittels zweier Haltestifte 30, 32 mit dem zweiten Stab 20 ortsfest, das heißt auch drehfest, verbunden.

In Fig. 2 ist die erfindungsgemäße Vorrichtung 10 in gekoppeltem Zustand in Seitenansicht gezeigt, wobei die in Fig. 2 dargestellte Ansicht eine um 90° um die Längsachse gedrehte Seitenansicht der in Fig.1 gezeigten Anordnung, jedoch im aneinander gefügten und verbundenen Zustand wiedergibt.

Demgemäß sind in der Darstellung gemäß Fig. 2 nur ein Rest des ersten Stabes 12 und des zweiten Stabes 20 sowie die Verriegelungshülse 24 zu sehen, da sowohl die Kupplungshülse 14 als auch der Kupplungsdorn 28 durch die Verriegelungshülse 24 beziehungsweise den zweiten Stab 20 verdeckt sind.

Die Verriegelungshülse 24 weist in ihrem kupplungsfernen Bereich ein Langloch 34 auf, welches einerseits als Verdrehsicherung der Verriegelungshülse 24 dient und andererseits auch die axiale Verschiebbarkeit der Verriegelungshülse 24 begrenzt.

In entsprechender Weise sind Durchgriffsöffnungen 36 in der Verriegelungshülse 24 zur endseitigen Fixierung der Kupplungshülse 14 wie auch der Verriegelungshülse 24 mittels hier vorgesehener Fixierbolzen 38 vorgesehen, wobei letztere nicht als radial durchlaufende Bolzen wie der Sperrbolzen 16 oder der Kupplungsbolzen 22 ausgebildet sind, sondern in diametral gegenüberliegend angeordneten Bohrungen in der Kupplungshülse 14 verankert sind.

Die Durchgriffsöffnungen 36 ihrerseits sind ebenfalls als Langlöcher ausgebildet und gewähren so der Verriegelungshülse 24 das zur Verschiebung erforderliche Axialspiel, das heißt die für die Entriegelung notwendige Längsverschiebbarkeit.

Als Montagehilfe, nämlich zur zeitweiligen Abstützung eines zu verlängernden Stabes, kann zusätzlich eine Halterung vorgesehen sein, welche an einem Handlauf einhängbar ist und eine etwa U-förmige Aufnahme für den zu verlängernden Stab aufweist, der sich darin abstützt, indem für einen seitlich überstehenden Bolzen eine Lagerung beiderseits der Aufnahme vorgesehen ist. Um den Stab zu sichern und ein selbsttätiges Herausgleiten aus der Aufnahme während des Verlängerns zu verhindern, ist ferner ein Sperrstift vorgesehen, der seitlich den Zugang zur U-förmigen Aufnahme blockiert.

### Bezugszeichenliste

- 10: erfindungsgemäße Vorrichtung
- 12: erster Stab
- 14: Kupplungshülse
- 16: Sperrbolzen
- 18: Ausnehmung (Verriegelungskulisse)
- 20: Zweiter Stab
- 22: Kupplungsbolzen
- 24: Verriegelungshülse
- 26: Ausnehmung (Schlitz)
- 28: Kupplungsdorn
- 30: Haltestift
- 32: Haltestift
- 34: Langloch
- 36: Durchgriffsöffnung (Langloch)
- 38: Fixierbolzen

## Patentansprüche

1. Eine Vorrichtung zur Handhabung von Kleinbauteilen und/oder Werkzeugen in kerntechnischen Anlagen, insbesondere in Reaktorbehältern und in Brennelementlagerbecken mit einem ersten Stab , der an seinem ersten Ende Greif- oder Haltemittel für die Handhabung der Kleinbauteile und/oder Werkzeuge aufweist und an seinem entgegengesetzten zweiten Ende mit Kupplungsmitteln versehen ist, die mit einem weiteren Stab zusammenarbeiten, der zur Verlängerung des ersten Stabes dient und die Stäbe als Hohlstäbe ausgebildet sind und die Kupplungsmittel von einer in ein Ende des ersten Stabes eingesetzten Kupplungshülse gebildet ist, die fest mit dem ersten Stab verbunden ist, dass die Kupplungshülse den ersten Stab längenbezogen überragt und den weiteren Stab zur Führung und Halterung aufnimmt, wobei die Kupplungshülse in ihrem den ersten Stab überragenden Bereich mit einer Verriegelungseinrichtung versehen ist, welche der Sicherung der Verbindung des weiteren Stabes mit dem ersten Stab dient, **dadurch gekennzeichnet, dass** die Verriegelungseinrichtung (24) an ihrem zum Stabende weisenden Ende wenigstens eine schlitzförmige Ausnehmung (26) aufweist, welche mit wenigstens einem am zugewandten Ende des zweiten Stabes (20) angeordneten seitlich herausragenden Kupplungsbolzen (22) zu dessen Aufnahme zusammenarbeitet.

2. Vorrichtung nach einem der vorherigen Ansprüche, **dadurch gekennzeichnet, dass** die Verriegelungseinrichtung (24) als Schiebemuffe ausgebildet ist, die auf der Außenfläche des ersten Stabes (12) aufgeschoben ist und mittels eines Sperrbolzens (16) drehfest aber axial verschieblich gestaltet ist.

3. Vorrichtung nach einem der vorherigen Ansprüche, **dadurch gekennzeichnet, dass** die formschlüssige Verbindung zwischen dem ersten und dem zweiten Stab mittels des im zweiten Stab endnah angeordneten Kupplungsbolzens (22) vorgesehen ist, der in eine Verriegelungskulisse (18) eingreift.

4. Vorrichtung nach Anspruch 3, **dadurch gekennzeichnet, dass** der an die Verriegelungskulisse (18) angesetzte zweite Stab (20) mittels geringer Längsverschiebung sowie Drehung um seine Längsachse die Endposition in der-Verriegelungskulisse (18) erreicht.

5. Vorrichtung nach einem der vorherigen Ansprüche, **dadurch gekennzeichnet, dass** als Verriegelungseinrichtung (24) eine als Schiebemuffe ausgebildete Verriegelungshülse vorgesehen ist, welche zwecks Verriegelung zum Kupplungsende hin verschiebbar ist, wobei sie einen Verriegelungsbolzen in der schlitzförmigen Ausnehmung aufnimmt.

6. Vorrichtung nach Anspruch 5, **dadurch gekennzeichnet, dass** die als Schiebemuffe ausgebildete Verriegelungshülse (24) eine Entriegelung der Stabverbindung verhindert, indem sie durch einen in ein an ihrem anderen Ende befindliches Langloch (34) eingreifenden Sperrbolzen (16) gegen Verdrehung blockiert ist.

7. Vorrichtung nach einem der vorherigen Ansprüche 3 oder 4, **dadurch gekennzeichnet, dass** die Kupplungshülse (14) in dem die Verriegelungskulisse aufnehmenden Bereich verstärkt ist und somit eine größere Wanddicke aufweist als in dem Übrigen Bereich.

8. Vorrichtung nach einem der vorherigen Ansprüche 3,4 oder 7, **dadurch gekennzeichnet, dass** die Verriegelungskulisse von einer in die Hülsenwandung eingeformten kurvigen Innennut oder von einer in die Hülsenwandung entsprechend eingeformten Ausnehmung, zum Beispiel gekrümmtes Langloch, gebildet ist.

9. Vorrichtung nach einem der vorherigen Ansprüche 5 bis 8, **dadurch gekennzeichnet, dass** die Verriegelungshülse (14) mit einer Feder versehen ist.

10. Vorrichtung nach Anspruch 9, **dadurch gekennzeichnet, dass** zur Verbindung mit dem zweiten Stab (20) die Verriegelungshülse (24) gegen die Federkraft aus der normalerweise erreichten Verriegelungsstellung verschoben ist und selbsttätig in die Verriegelungsstellung zurückgleitet.

11. Vorrichtung nach einem der vorherigen Ansprüche 3,4,7 oder 8, **dadurch gekennzeichnet, dass** die Verriegelungskulisse (18) winkelförmig mit gleich oder verschieden langen Schenkeln ausgeführt ist.

12. Vorrichtung nach Anspruch 11, **dadurch gekennzeichnet, dass** ein Schenkel von der Stirnseite der Kupplungshülse (14) achsparallel zur Längsachse verläuft bis zu einem ersten Winkel, von wo er sich quer hierzu über einen Teilumfang der Kupplungshülse erstreckt.

13. Vorrichtung nach Anspruch 11 oder 12, **dadurch gekennzeichnet, dass** der achsparallele Schenkel gleich oder länger ist als der querlaufende Schenkel.

14. Vorrichtung nach einem der Ansprüche11 bis 13, **dadurch gekennzeichnet, dass** die Verriegelungskulisse (18) etwa U-förmig als Doppelwinkel mit gleich oder unterschiedlich langen Schenkeln ausgeführt ist.

15. Vorrichtung nach Anspruch 14, **dadurch gekennzeichnet, dass** ein erster Schenkel von der Stirnseite der Kupplungshülse (14) achsparallel zur Längsachse verläuft bis zu einem ersten Winkel, von wo er sich quer hierzu über einen Teilumfang der Kupplungshülse (14) erstreckt bis zu einem zweiten Winkel, wobei sein Verlauf ab dem zweiten Winkel dem ersten Schenkel wieder achsparallel ist.

16. Vorrichtung nach Anspruch 14, **dadurch gekennzeichnet, dass** ein erster Schenkel etwa die doppelte Länge aufweist wie ein querlaufender Schenkel, wobei der weitere achsparallel verlaufende Schenkel eine Länge aufweist, die dem 1- bis 2-fachen des Durchmessers eines wenigstens einseitig am zweiten Stab radial herausragenden Kupplungsbolzen (22) entspricht.

17. Vorrichtung nach einem der vorherigen Ansprüche, **dadurch gekennzeichnet**, dass- die Verriegelungshülse (24) mit einer Federeinrichtung versehen ist, welche dazu dient, die Verriegelungshülse (24) in ihre Endposition zu beaufschlagen und so deren Lage zu sichern.

18. Vorrichtung nach Anspruch 17, **dadurch gekennzeichnet, dass** die Federeinrichtung von wenigstens einer zylindrischen Schraubenfeder gebildet ist, welche sich einerseits in der Verriegelungshülse (24) und anderseits an dem Sperrbolzen abstützt.

## Claims

1. Apparatus for handling small components and/or tools in nuclear facilities, in particular in reactor vessels and in fuel pools, having a first pole which has at its first end gripping or holding means for handling the small components and/or tools and is provided at its opposite second end with coupling means which cooperate with a further pole that serves as an extension of the first pole, and the poles are configured as hollow poles and the coupling means is formed by a coupling sleeve inserted into one end of the first pole, said coupling sleeve being firmly connected to the first pole, wherein the coupling sleeve projects longitudinally beyond the first pole and accommodates the further pole for guiding and amounting, wherein the coupling sleeve is provided, in its region projecting beyond the first pole, with a locking device which serves to secure the connection of the further pole to the first pole, **characterized in that** the locking device (24) has, at its end facing towards the pole end, at least one slot-like cutout (26) which cooperates with at least one laterally projecting coupling pin arranged on the facing end of the second pole (20') in order to accommodate said coupling pin (22).

2. Apparatus according to the preceding claim, **characterized in that** the locking device (24) is configured as a sliding sleeve which is pushed on the outer, surface of the first pole (12) and is designed in a rotationally fixed but axially movable manner by means of a locking bolt (16).

3. Apparatus according to either of the preceding claims, **characterized in that** the form-fitting connection between the first and the second pole is provided by means of the coupling pin (22) arranged closed to the end of the second pole, said coupling pin (22) engaging in a slotted locking guide (18).

4. Apparatus according to Claim 3, **characterized in that** the second pole (20) attached to the slotted locking guide (18) reaches the end position in the slotted locking guide (18) by means of longitudinal movement through a short distance and rotation about its longitudinal axis.

5. Apparatus according to one of the preceding claims, **characterized in that** a locking sleeve configured as a sliding sleeve is provided as the locking device (24), said locking sleeve being movable towards the coupling end for the purpose of locking, wherein it accommodates a locking bolt in the slot-like cutout.

6. Apparatus according to Claim 5, **characterized in that** the locking sleeve (24) configured as a sliding sleeve prevents the pole connection from being unlocked, **in that** it is prevented from rotating by a locking bolt (16) engaging in a slotted hole (34) located at its other end.

7. Apparatus according to either of the preceding Claims 3 and 4, **characterized in that** the coupling sleeve (14) is reinforced in the region accommodating the slotted locking guide and thus has a greater wall thickness than in the remaining region.

8. Apparatus according to one of the preceding Claims 3, 4 and 7, **characterized in that** the slotted locking guide is formed by a curved inner groove formed in the sleeve wall or by a cutout formed in a corresponding manner in the sleeve wall, for example a curved slotted hole.

9. Apparatus according to one of the preceding Claims 5 to 8, **characterized in that** the locking sleeve (14) is provided with a spring.

10. Apparatus according to Claim 9, **characterized in that**, for connecting to the second pole (20), the locking sleeve (24) is moved counter to the spring force out of the normally reached locking position and slides back automatically into the locking position.

11. Apparatus according to one of the preceding Claims 3, 4, 7 and 8, **characterized in that** the slotted locking guide (18) is embodied in an angular manner with legs with the same or different lengths.

12. Apparatus according to Claim 11, **characterized in that** one leg extends from the end side of the coupling sleeve (14) in an axially parallel manner to the longitudinal axis as far as a first angle, from where it extends transversely thereto around part of the circumference of the coupling sleeve.

13. Apparatus according to Claim 11 or 12, **characterized in that** the axially parallel leg is the same length as or longer than the transversely extending leg.

14. Apparatus according to one of Claims 11 to 13, **characterized in that** the slotted locking guide (18) is embodied in an approximately U-shaped manner as a double angle with legs with the same or different lengths.

15. Apparatus according to Claim 14, **characterized in that** a first leg extends from the end side of the coupling sleeve (14) in an axially parallel manner to the longitudinal axis as far as a first angle, from where it extends transversely thereto around part of the circumference of the coupling sleeve (14) as far as a second angle, wherein its course starting from the second angle is axially parallel to the first leg again.

16. Apparatus according to Claim 14, **characterized in that** a first leg is about twice as long as a transversely extending leg, wherein the further leg extending in an axially parallel manner has a length which corresponds to 1 to 2 times the diameter of a coupling pin (22) projecting radially from at least one side of the second pole.

17. Apparatus according to one of the preceding claims, **characterized in that** the locking sleeve (24) is provided with a spring device which serves to act on the locking sleeve (24) in its end position and thus to secure its position.

18. Apparatus according to Claim 17, **characterized in that** the spring device is formed by at least one cylindrical coil spring which is supported at one end in the locking sleeve (24) and at the other end on the locking bolt.

## Revendications

1. Dispositif destiné à la manipulation de petits composants et/ou d'outils dans des installations nucléaires, en particulier dans des cuves de réacteurs et dans des piscines de stockage d'éléments combustibles, comprenant une première barre qui présente à sa première extrémité des moyens de préhension ou de retenue pour la manipulation des petits composants et/ou des outils et qui est munie à sa deuxième extrémité opposée de moyens d'accouplement qui coopèrent avec une barre supplémentaire qui sert à prolonger la première barre, les barres étant réalisées sous forme de barres creuses et les moyens d'accouplement étant formés par une douille d'accouplement insérée dans une extrémité de la première barre, laquelle est connectée fixement à la première barre, la douille d'accouplement dépassant en longueur la première barre et recevant la barre supplémentaire en vue de son guidage et de sa fixation,
la douille d'accouplement, dans sa région dépassant au-delà de la première barre, étant pourvue d'un dispositif de verrouillage qui sert à fixer la connexion de la barre supplémentaire à la première barre,
**caractérisé en ce que**
le dispositif de verrouillage (24) présente au niveau de son extrémité tournée vers l'extrémité de la barre au moins un évidement en forme de fente (26) qui coopère avec au moins un boulon d'accouplement (22) faisant saillie latéralement et disposé à l'extrémité tournée vers lui de la deuxième barre (20) en vue de son logement.

2. Dispositif selon la revendication précédente, **caractérisé en ce que** le dispositif de verrouillage (24) est réalisé sous forme de manchon coulissant qui est enfilé sur la surface extérieure de la première barre (12) et qui est configuré au moyen d'un boulon de verrouillage (16) de manière solidaire en rotation mais déplaçable axialement.

3. Dispositif selon l'une quelconque des revendications précédentes, **caractérisé en ce que** la connexion par engagement par correspondance de forme entre la première et la deuxième barre est prévue au moyen du boulon d'accouplement (22) disposé à proximité de l'extrémité de la deuxième barre, lequel boulon d'accouplement s'engage dans une coulisse de verrouillage (18).

4. Dispositif selon la revendication 3, **caractérisé en ce que** la deuxième barre (20) appliquée contre la coulisse de verrouillage (18) au moyen d'un faible déplacement longitudinal ainsi que d'une rotation autour de son axe longitudinal atteint la position d'extrémité dans la coulisse de verrouillage (18).

5. Dispositif selon l'une quelconque des revendications précédentes, **caractérisé en ce qu'**une douille de verrouillage réalisée sous forme de manchon coulissant est prévue en tant que dispositif de verrouillage (24), laquelle peut être déplacée aux fins d'un verrouillage vers l'extrémité d'accouplement, la douille de verrouillage recevant un boulon de verrouillage dans l'évidement en forme de fente.

6. Dispositif selon la revendication 5, **caractérisé en ce que** la douille de verrouillage (24) réalisée sous forme de manchon coulissant empêche un déverrouillage de la connexion des barres, par le fait qu'elle est bloquée contre une rotation par un boulon de verrouillage (16) s'engageant dans un trou oblong (34) situé au niveau de son autre extrémité.

7. Dispositif selon l'une quelconque des revendications 3 ou 4, **caractérisé en ce que** la douille d'accouplement (14) est renforcée dans la région recevant la coulisse de verrouillage et présente par conséquent une plus grande épaisseur de paroi que dans la région restante.

8. Dispositif selon l'une quelconque des revendications 3, 4 ou 7, **caractérisé en ce que** la coulisse de verrouillage est formée par une rainure interne courbe formée dans la paroi de la douille ou par un évidement formé de manière correspondante dans la paroi de la douille, par exemple un trou oblong courbe.

9. Dispositif selon l'une quelconque des revendications 5 à 8, **caractérisé en ce que** la douille de verrouillage (14) est pourvue d'un ressort.

10. Dispositif selon la revendication 9, **caractérisé en ce que** pour la connexion à la deuxième barre (20), la douille de verrouillage (24) est déplacée à l'encontre de la force de ressort hors de la position de verrouillage normalement atteinte et revient par glissement automatiquement dans la position de verrouillage.

11. Dispositif selon l'une quelconque des revendications précédentes 3, 4, 7 ou 8, **caractérisé en ce que** la coulisse de verrouillage (18) est réalisée sous forme coudée avec des branches,de longueurs identiques ou différentes.

12. Dispositif selon la revendication 11, **caractérisé en ce qu'**une branche s'étend depuis le côté frontal de la douille d'accouplement (14) avec son axe parallèle à l'axe longitudinal jusqu'à un premier coude d'où elle s'étend transversalement à celui-ci sur une périphérie partielle de la douille d'accouplement.

13. Dispositif selon la revendication 11 ou 12, **caractérisé en ce que** la branche d'axe parallèle est de longueur identique ou supérieure à celle de la branche s'étendant transversalement.

14. Dispositif selon l'une quelconque des revendications 11 à 13, **caractérisé en ce que** la coulisse de verrouillage (18) est réalisée approximativement en forme de U sous forme de double coude avec des branches de longueurs identiques ou différentes.

15. Dispositif selon la revendication 14, **caractérisé en ce qu'**une première branche s'étend depuis le côté frontal de la douille d'accouplement (14) avec son axe parallèle à l'axe longitudinal jusqu'à un premier coude d'où elle s'étend transversalement à celui-ci sur une périphérie partielle de la douille d'accouplement (14) jusqu'à un deuxième coude, son allure étant à nouveau parallèle à l'axe de la première branche à partir du deuxième coude.

16. Dispositif selon la revendication 14, **caractérisé en ce qu'**une première branche présente approximativement le double de la longueur d'une branche s'étendant transversalement, la branche supplémentaire s'étendant avec son axe parallèle présentant une longueur qui correspond au diamètre ou au double du diamètre d'un boulon d'accouplement (22) faisant saillie radialement au moins d'un côté au niveau de la deuxième barre.

17. Dispositif selon l'une quelconque des revendications précédentes, **caractérisé en ce que** la douille de verrouillage (24) est pourvue d'un dispositif de ressort qui sert à solliciter la douille de verrouillage (24) dans sa position d'extrémité et par conséquent à la fixer en position.

18. Dispositif selon la revendication 17, **caractérisé en ce que** le dispositif de ressort est formé par au moins un ressort hélicoïdal cylindrique, qui s'appuie d'une part dans la douille de verrouillage (24) et d'autre part contre le boulon de verrouillage.
